# EUROPEAN PATENT SPECIFICATION

(11) **EP 3 687 277 B1**
(45) Date of publication and mention of the grant of the patent: **09.06.2021**
(21) Application number: 18705898.7
(22) Date of filing: 15.02.2018
(51) Int. Cl.: A01G 3/025

(54) **POLE PRUNER**
HOCHENTASTER
PERCHE ÉLAGUEUSE

(30) Priority: 27.09.2017 DE 102017009042
(43) Date of publication of application: 05.08.2020
(73) Proprietor: Husqvarna AB, 561 82 Huskvarna (SE)
(72) Inventor: KISTLER, Michael, 89185 Hüttisheim (DE)
(74) Representative: Finkele, Rolf
(86) International application number: PCT/EP2018/053790
(87) International publication number: WO 2019/063135

(56) References cited:
- DE-U1- 20 317 085
- DE-U1-202012 102 973
- GB-A- 2 214 772
- US-A- 5 933 965
- US-A1- 2010 095 532
- US-A1- 2017 118 921

## Description

### TECHNICAL FIELD

The present disclosure relates to extendable cutting tools. More specifically, the present disclosure relates to the extendable cutting tools such as a pole pruner.

### BACKGROUND

Conventional extendable cutting tools such as a pole pruner find applications for lopping trees, particularly at heights substantially out of reach for a common user. The extendable cutting tools have a longitudinal member which includes a pair of cutting blades at an end. The longitudinal member may be extended to different heights as per requirement and thereafter used to perform lopping operations using the pair of cutting blades. Further, the extendable cutting tools include a sleeve member to control the lopping operations by the pair of cutting blades, including locking of the same. There have been various developments regarding lopping or cutting operations of the extendable cutting tools.

However, during working of the extendable cutting tools there generally arises a requirement of engaging with a part of the tree (say a branch which is cut), particularly post the lopping or cutting operations. This requirement becomes more challenging with increasing working heights involving such extendable cutting tools. In some cases, obstruction by the branch, if not removed, before further lopping/cutting operations may lead to undue hindrances for subsequent operations. In some case, the sleeve member may include a mechanism to selectively lock the pair of cutting blades to engage around the branch. This allows ease of handling of the part of the tree. However, existing mechanisms involve considerable user effort and skill among other demerits to selectively lock the pair of cutting blades.

An example of an extendable tool is provided in U.S. patent number 5,933,965 (hereinafter referred to as '965 reference). The '965 reference provides a tool for performing lopping, pruning and similar operations. The tool includes a housing assembly formed of a pair of telescoping tubular sections. The tool also includes a tool head, a head line and an actuating line. The tool head includes a spring-biased blade coupled to the head line which is connected to a slidable block. The actuating line engages the slidable block so that tensioning the actuating line causes movement of the blade.

### SUMMARY

In view of the above, it is an objective of the present invention to solve or at least reduce the drawbacks discussed above. The objective is at least partially achieved by an extendable cutting tool. The extendable cutting tool includes a longitudinal member having a first end and a second end. The extendable cutting tool includes a pair of cutting blades which are coupled to the longitudinal member towards the first end. The pair of cutting blades are configured to move between a first position and a second position. The extendable cutting tool includes a spring mechanism which can bias the pair of cutting blades in the first position. The extendable cutting tool includes a sleeve member which is concentrically coupled to the longitudinal member towards the second end. Further, the sleeve member is coupled to the spring mechanism such that the spring mechanism biases the sleeve member towards the first end of the longitudinal member. A sliding motion of the sleeve member towards the second end of the longitudinal member effects the movement of the pair of cutting blades from the first position towards the second position. The extendable cutting tool is characterized in that the sleeve member is further configured to rotate and deform reversibly relative to the longitudinal member such that a rotational motion and deformation of the sleeve member in a first rotation direction locks the movement of the sleeve member. The rotational motion and deformation of the sleeve member in the first rotation direction also locks the movement of the pair of cutting blades between the first position and the second position. Thus, the extendable cutting tool allows lopping/cutting and locking operation related to the pair of cutting blades to be performed by a single hand engaging with the sleeve member.

According to an embodiment of the present invention, the rotational motion and deformation of the sleeve member relative to the longitudinal member in a second rotation direction allows the movement of the pair of cutting blades between the first position and the second position. This allows releasing of any object such as a branch of a tree, locked earlier due to locking of the pair of cutting blades between the first position and the second position.

According to an embodiment of the present invention, the pair of cutting blades perform a cutting action in the second position. During implementation, the second position leads to complete lopping or cutting of the branch. The branch may then be required to be locked between the pair of cutting blades, for easy and safe transportation of the branch by the extendable cutting tool.

According to an embodiment of the present invention, the cutting tool is a pole pruner. The pole pruner extends the reach of person to lop or cut branches at substantial heights of the tree or for any other similar application. Further, the branch which is cut can be locked (or clamped) while using existing blade geometry.

According to an embodiment of the present invention, the sleeve member is made of an elastic material. Use of the elastic material leads to ease of locking of the sleeve member with least user effort along with ergonomic benefits.

According to an embodiment of the present invention, the extendable cutting tool further includes a handle towards the second end. This allows ease of handling of the extendible cutting tool while performing operations such as cutting, lopping, or even carrying the branch.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of an extendable cutting tool, in accordance with an embodiment of the present invention;
**FIG. 2** shows a perspective view of a sleeve member, in accordance with an embodiment of the present invention;
**FIG. 3** shows a perspective view of rotational motion of the sleeve member in a first rotational direction, in accordance with an embodiment of the present invention;
**FIG. 4** shows a perspective view of rotational motion of the sleeve member in a second rotation direction, in accordance with an embodiment of the present invention; and
**FIG. 5** shows a perspective view of the extendable cutting tool along with a clamped branch, in accordance with an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

In the drawings and specification, there have been disclosed preferred embodiments and examples of the invention and, although specific terms are employed, they are used in a generic and descriptive sense only and not for the purpose of limitation of the scope of the invention being set forth in the following claims.

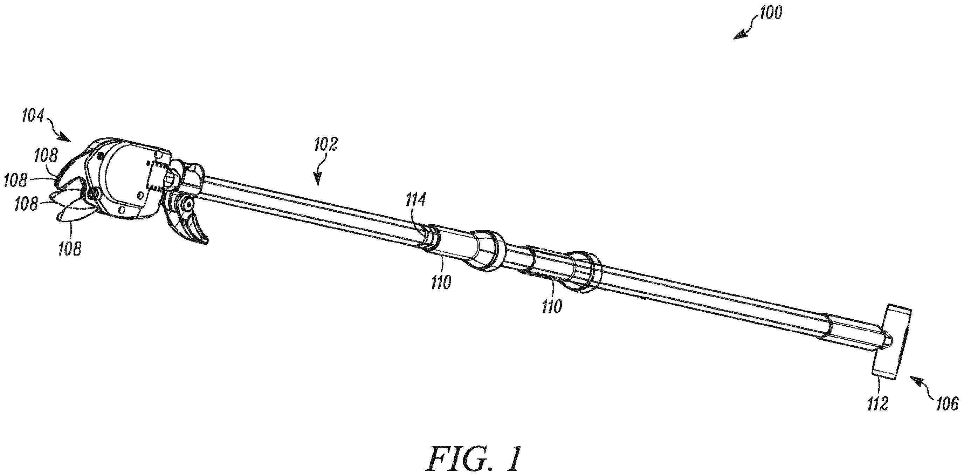

**FIG. 1** illustrates an extendable cutting tool **100.** The extendable cutting tool **100** includes a longitudinal member **102.** The longitudinal member **102** has a first end **104** and a second end **106.** The extendable cutting tool **100** includes a pair of cutting blades **108** coupled to the longitudinal member **102** towards the first end **104.** The pair of cutting blades **108** can be configured to move between a first position (shown in solid lines) and a second position (shown in dotted lines). The extendable cutting tool **100** includes a spring mechanism (not shown) which biases the pair of cutting blades **108** in the first position.

The longitudinal member **102** may have a telescopic arrangement such that a range of extensions is provided for working of the extendable cutting tool **100.** Further, the extendable cutting tool **100** may employ any means as known or used in the art for effectuating the extension of the longitudinal member **102.**

As used herein, a person having ordinary skill in the art would appreciate that "lopping", "cutting", by the extendable cutting tool **100,** of an object such as a branch of a tree leads to complete detachment of the branch from the tree. While "locking", "clamping" of the branch, in context of the present disclosure, by the extendable cutting tool **100** merely allows secure holding of the branch for transportation of the branch, with absence of any unintentional lopping/cutting of the branch.

The extendable cutting tool **100** includes a sleeve member **110** which is concentrically coupled to the longitudinal member **102** towards the second end **106.** The sleeve member **110** is coupled to the spring mechanism such that the spring mechanism biases the sleeve member **110** towards the first end **104** of the longitudinal member **102.** Further, as illustrated, a sliding motion of the sleeve member **110** (shown with dotted lines) towards the second end **106** of the longitudinal member **102** leads to the movement of the pair of cutting blades **108** from the first position towards the second position. Notably, the pair of cutting blades **108** perform a cutting action in the second position based on a size or shape of the branch of tree being cut. A stopper member 114 is provided on the longitudinal member 102 to restrict sliding motion of the sleeve member 110 past the stopper member 114.

The extendable cutting tool **100** includes a handle **112** towards the second end **106** of the extendable cutting tool **100.** During working, a user may engage one hand with the handle **112** while another hand may be used to engage with the sleeve member **110.** This allows adjustment of the sleeve member **110** to control the pair of cutting blades **108** by use of a single hand of a user.

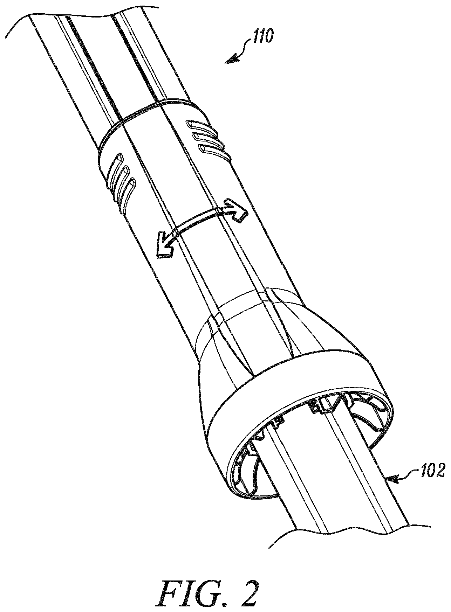

**FIG. 2** illustrates the sleeve member **110.** The sleeve member **110** initially remains in a non-deformed state, as shown herein, to allows the sliding motion of the sleeve member **110** along the longitudinal member **102.** However, there may be cases where the user needs to lock the pair of cutting blades **108** such as for holding the branch **502** (not shown) between the pair of the cutting blades **108.** Such cases require preventing the sliding motion of the sleeve member **110.**

During working, the sleeve member **110** may be used to change a mode of operation of the extendable cutting tool **100.** The mode of operation can be lopping/cutting or only grabbing a branch of a tree depending upon effectuated movement (whether rotational movement or sliding motion) of the sleeve member **110.** At one time, only one mode of operation is possible for the extendable cutting tool **100** due to constraints on the sleeve member **110.**

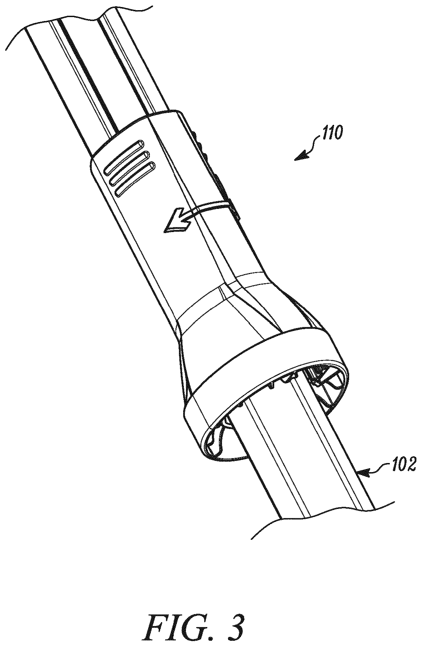

**FIG. 3** illustrates the rotational motion of the sleeve member **110** in the first rotation direction (shown with arrow on the sleeve member **110).** The sleeve member **110** is configured to rotate relative to the longitudinal member **102** such that a rotational motion of the sleeve member **110** in a first rotation direction locks the movement of the sleeve member **110.** This movement (i.e. in the first rotation direction) also locks the movement of the pair of cutting blades **108** between the first position and the second position. The locking of the pair of cutting blades **108** may be performed at any position between the first position and the second position, depending upon size or shape of the branch **502** (or any other object) to be clamped as would be appreciated by a person having ordinary skill in the art.

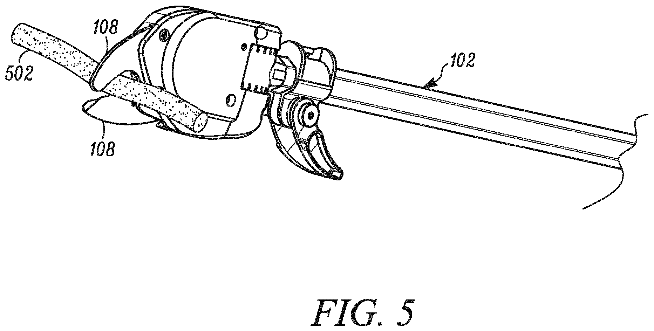

The rotational motion in the first rotation direction leads to a reversible deformation of the sleeve member **110** so as to lock the movement thereof. As illustrated, the reversible deformation prevents any sliding motion of the sleeve member **110** such that the user may safely engage the pair of cutting blades **108** with the branch **502** (shown un **FIG. 5****)** or the like, without unintentionally lopping or cutting the branch **502** fully. Thus, the sleeve member **110** may be used to lock the pair of cutting blades **108** in order to secure the branch **502** therebetween.

The selective deformation of the sleeve member **110** is reversible in nature so as to conveniently change between the modes of operation of the cutting tool **100.** Notably, locking of the pair of cutting blades **108** may be highly desirable to engage with the object (i.e. branch **502** or the like) as per need of the user.

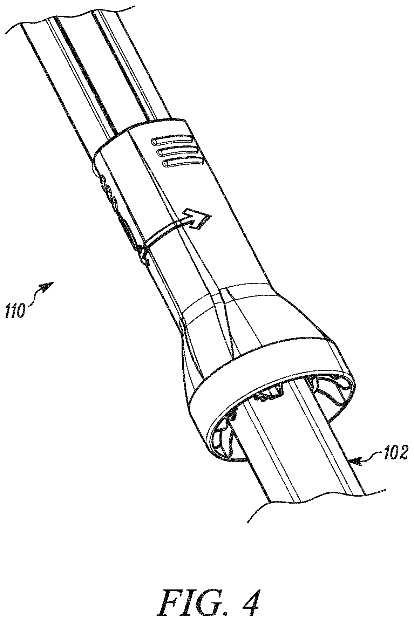

**FIG. 4** illustrates the rotational motion of the sleeve member **110** relative to the longitudinal member **102** in a second rotation direction (shown with an arrow on the sleeve member **110).** This movement (i.e. in the second rotation direction) of the sleeve member **110** leads to unlocking the movement of the pair of cutting blades 108 from their earlier locked movement. Moreover, movement in the second rotation direction allows the movement of the pair of cutting blades **108** between the first position and the second position. This allows lopping or cutting of the branch **502** (shown in **FIG. 5****)** with the sliding motion of the sleeve member **110** towards the second end **106.**

In a preferred embodiment, the sleeve member **110** may be made of an elastic material such as, but not limited to, plastic, rubber, silicon or any combination thereof. However, it may readily be made of any other material, suitable in accordance with implementation of the present disclosure, as used in the art.

**FIG. 5** illustrates the pair of cutting blades **108** locking the branch **502.** During locking of the branch **502,** initially the sleeve member **110** is made to undergo a desired extent of sliding motion towards the second end **106** of the longitudinal member **102.** The extent of the sliding motion may be dependent upon dimensions or shape of the branch **502.** Preferably, the sleeve member **110** is made to undergo the sliding motion till the pair of cutting blades **108** at least come in firm contact with the branch **502.** Then, the sleeve member **110** is made to undergo the rotational motion in the first direction in order to lock the pair of cutting blades **108** and thereby prevent any unintentional lopping or cutting by the pair of cutting blades **108.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- 100: Extendable Cutting Tool
- 102: Longitudinal Member
- 104: First End
- 106: Second End
- 108: Pair of Cutting Blades
- 110: Sleeve Member
- 112: Handle
- 114: Stopper
- 502: Branch

## Claims

1. An extendable cutting tool **(100)** comprising:
a longitudinal member **(102)** having a first end **(104)** and a second end **(106);**
a pair of cutting blades **(108)** coupled to the longitudinal member **(102)** towards the first end **(104),** the pair of cutting blades **(108)** configured to move between a first position and a second position;
a spring mechanism configured to bias the pair of cutting blades **(108)** in the first position;
a sleeve member **(110)** concentrically coupled to the longitudinal member **(102)** towards the second end **(106),** and coupled to the spring mechanism such that the spring mechanism biases the sleeve member **(110)** towards the first end **(104)** of the longitudinal member **(102);**
wherein a sliding motion of the sleeve member **(110)** towards the second end **(106)** of the longitudinal member **(102)** effects the movement of the pair of cutting blades **(108)** from the first position towards the second position;
**characterized in that:**
the sleeve member **(110)** is further configured to rotate, and reversibly deform relative to the longitudinal member **(102)** such that a rotational motion, and deformation of the sleeve member **(110)** in a first rotation direction locks the movement of the sleeve member **(110),** and the movement of the pair of cutting blades **(108)** between the first position and the second position.

2. The extendable cutting tool **(100)** of claim **1,** wherein the rotational motion, and deformation of the sleeve member **(110)** relative to the longitudinal member **(102)** in a second rotation direction allows the movement of the pair of cutting blades **(108)** between the first position and the second position.

3. The extendable cutting tool **(100)** of claim **1,** wherein the pair of cutting blades **(108)** perform a cutting action in the second position.

4. The extendable cutting tool **(100)** of claim **1,** wherein the cutting tool **(100)** is a pole pruner.

5. The extendable cutting tool **(100)** of claim **1,** wherein the sleeve member **(110)** is made of an elastic material.

6. The extendable cutting tool **(100)** of claim **1** further includes a handle **(112)** towards the second end **(106).**

## Patentansprüche

1. Ausziehbares Schneidwerkzeug (100), umfassend:
ein Längselement (102) mit einem ersten Ende (104) und einem zweiten Ende (106);
ein Paar von Schneidklingen (108), die mit dem Längselement (102) in Richtung des ersten Endes (104) gekoppelt sind, wobei das Paar von Schneidklingen (108) konfiguriert ist, um sich zwischen einer ersten Position und einer zweiten Position zu bewegen;
einen Federmechanismus, der konfiguriert ist, um das Paar von Schneidklingen (108) in der ersten Position vorzuspannen;
ein Hülsenelement (110), das konzentrisch mit dem Längselement (102) in Richtung des zweiten Endes (106) gekoppelt ist und mit dem Federmechanismus derart gekoppelt ist, dass der Federmechanismus das Hülsenelement (110) in Richtung des ersten Endes (104) des Längselements (102) vorspannt;
wobei eine Gleitbewegung des Hülsenelements (110) in Richtung des zweiten Endes (106) des Längselements (102) die Bewegung des Paares von Schneidklingen (108) von der ersten Position in Richtung der zweiten Position bewirkt,
**dadurch gekennzeichnet, dass**
das Hülsenelement (110) ferner konfiguriert ist, um sich zu drehen und sich relativ zu dem Längselement (102) reversibel zu verformen, so dass eine Drehbewegung und eine Verformung des Hülsenelements (110) in einer ersten Drehrichtung die Bewegung des Hülsenelements (110) und die Bewegung des Schneidmesserpaares (108) zwischen der ersten Position und der zweiten Position sperrt.

2. Ausziehbares Schneidwerkzeug (100) nach Anspruch 1, wobei die Drehbewegung und Verformung des Hülsenelements (110) relativ zum Längsträger (102) in einer zweiten Drehrichtung die Bewegung des Schneidmesserpaares (108) zwischen der ersten Position und der zweiten Position ermöglicht.

3. Ausziehbares Schneidwerkzeug (100) nach Anspruch 1, wobei das Paar von Schneidklingen (108) eine Schneidwirkung in der zweiten Position ausführt.

4. Ausziehbares Schneidwerkzeug (100) nach Anspruch 1, wobei das Schneidwerkzeug (100) eine Polschere ist.

5. Ausziehbares Schneidwerkzeug (100) nach Anspruch 1, wobei das Hülsenelement (110) aus einem elastischen Material besteht.

6. Das ausziehbare Schneidwerkzeug (100) nach Anspruch 1 ferner einen Griff (112) in Richtung des zweiten Endes (106) umfasst.

## Revendications

1. Outil de découpe extensible **(100)** comprenant :
un élément longitudinal **(102)** ayant une première extrémité **(104)** et une deuxième extrémité **(106)** ;
une paire de lames de découpe **(108)** couplées à l'élément longitudinal **(102)** vers la première extrémité **(104),** la paire de lames de découpe **(108)** configurée pour se déplacer entre une première position et une deuxième position ;
un mécanisme à ressort configuré pour solliciter la paire de lames de découpe **(108)** dans la première position ;
un élément de manchon **(110)** couplé de manière concentrique à l'élément longitudinal **(102)** vers la deuxième extrémité **(106),** et couplé au mécanisme à ressort de façon que le mécanisme à ressort sollicite l'élément de manchon **(110)** vers la première extrémité **(104)** de l'élément longitudinal **(102)** ;
dans lequel un mouvement de glissement de l'élément de manchon **(110)** vers la deuxième extrémité **(106)** de l'élément longitudinal **(102)** réalise le déplacement de la paire de lames de découpe **(108)** de la première position vers la deuxième position ;
**caractérisé en ce que** :
l'élément de manchon **(110)** est en outre configuré pour pivoter, et se déformer de manière réversible par rapport à l'élément longitudinal **(102)** de façon qu'un mouvement de rotation, et une déformation de l'élément de manchon **(110)** dans une première direction de rotation bloquent le déplacement de l'élément de manchon **(110),** et le déplacement de la paire de lames de découpe **(108)** entre la première position et la deuxième position.

2. Outil de découpe extensible **(100)** de la revendication **1,** dans lequel le mouvement de rotation, et une déformation de l'élément de manchon **(110)** par rapport à l'élément longitudinal **(102)** dans une deuxième direction de rotation permettent le mouvement de la paire de lames de découpe **(108)** entre la première position et la deuxième position.

3. Outil de découpe extensible **(100)** de la revendication **1,** dans lequel la paire de lames de découpe **(108)** effectue une action de découpe dans la deuxième position.

4. Outil de découpe extensible **(100)** de la revendication **1,** dans lequel l'outil de découpe **(100)** est une perche élagueuse.

5. Outil de découpe extensible **(100)** de la revendication **1,** dans lequel l'élément de manchon **(110)** est fait d'un matériau élastique.

6. Outil de découpe extensible **(100)** de la revendication 1 inclut en outre une poignée (112) vers la deuxième extrémité **(106).**
